Europäisches Patentamt

European Patent Office

Office européen des brevets

(19)

(11) **EP 1 232 790 A1**

(12) **EUROPEAN PATENT APPLICATION**
published in accordance with Art. 158(3) EPC

(43) Date of publication:
21.08.2002 Bulletin 2002/34

(51) Int Cl.[7]: **B01J 23/72**, B01J 23/80,
B01J 23/745, B01J 23/46,
B01J 37/02, C01B 3/32,
C01B 3/38, H01M 8/06,
C10G 11/02, C10K 1/32

(21) Application number: 00977859.8

(22) Date of filing: 22.11.2000

(86) International application number:
PCT/JP00/08234

(87) International publication number:
WO 01/037988 (31.05.2001 Gazette 2001/22)

(84) Designated Contracting States:
AT BE CH CY DE DK ES FI FR GB GR IE IT LI LU
MC NL PT SE TR

(30) Priority: 25.11.1999 JP 33391899

(71) Applicant: Kawasaki Jukogyo Kabushiki Kaisha
Kobe-shi, Hyogo 650-8670 (JP)

(72) Inventors:
• Shiizaki, Shinji
Kobe-shi, Hyogo 655-0885 (JP)

• Nagashima, Ikuo
Kobe-shi, Hyogo 651-2103 (JP)
• Terada, Seiji
Kobe-shi, Hyogo 651-2215 (JP)
• Sakai, Noriyuki
Hachioji-shi, Tokyo 192-0916 (JP)

(74) Representative:
Dempster, Benjamin John Naftel et al
Withers & Rogers,
Goldings House,
2 Hays Lane
London SE1 2HW (GB)

(54) **CATALYST FOR EXOTHERMIC OR ENDOTHERMIC REACTION, CATALYST FOR WATER-GAS-SHIFT REACTION AND CATALYST FOR SELECTIVE OXIDATION OF CARBON MONOXIDE, AND PLATE-FIN HEAT EXCHANGE TYPE REFORMER**

(57)    Provided is a catalyst for exothermic reaction such as combustion reaction or endothermic reaction such as steam reforming reaction and a method of producing the catalyst, a catalyst for water-gas-shift reaction or selective oxidization reaction of carbon monoxide and a method of producing the catalyst, and a plate-fin heat exchange type reformer. A method of producing a catalyst in which metal or metal oxide having catalytic activity is uniformly carried in a well-dispersed condition, comprises forming a porous oxide layer on a metal substrate, immersing the resulting metal substrate in an aqueous solution of a metal compound of a weak electrolyte with small degree of salt dissociation or in an organic solvent solution of a metal compound, and then calcining the resulting product. A plate-fin heat exchange type reformer having high heat conductivity is characterized in that a plurality of heat exchange elements each of which has a catalyst for combustion reaction on one of surfaces of a separating wall and a catalyst for steam reforming reaction, a catalyst for water-gas-shift reaction and a catalyst for selective oxidation reaction of carbon monoxide on the other surface thereof are provided. These catalysts are suitable for use in a hydrogen generator for a polymer electrolyte fuel cell, because it has a high activity at relatively low temperatures and by-product of carbon monoxide is reduced.

Fig. 7 (a)

Fig. 7 (b)

## Description

### [Technical Field]

The present invention relates to a catalyst for exothermic or endothermic reaction, and more particularly to a catalyst for steam reforming reaction of methanol or hydrocarbon that is suitable for use in a plate-fin heat exchange type reformer having heat exchange performance higher than that of the conventional packed bed and a production method thereof, a catalyst for combustion reaction for promoting the reforming reaction by the catalyst for steam reforming reaction and a production method thereof, a catalyst for promoting reaction for eliminating CO gas contained in reformed gas and a production method thereof, and a plate-fin heat exchange type reformer using these catalysts.

### [Background Art]

The present invention relates to a catalyst for exothermic or endothermic reaction. In view of the prior arts, objectives to be achieved by the present invention are broadly classified into the following four objectives.

The first objective is to provide a catalyst for promoting the endothermic reaction represented by steam reforming reaction and a production method thereof. The second objective is to provide a catalyst for promoting the exothermic reaction for supplying a heat source necessary for the endothermic reaction represented by the steam reforming reaction, and a production method thereof. The third objective is to provide a catalyst for promoting reaction for eliminating CO gas contained in the reformed gas and a production method thereof, because such CO gas is a catalyst poison to an electrode catalyst of a polymer electrolyte fuel cell. The fourth objective is to provide a plate-fin heat exchange type reformer using these catalysts and having high heat transfer efficiency.

Hereinafter, the first to fourth objectives will be described according to comparison with the prior arts.

### 1. Prior Art and First Objective

In general, many of chemical reactions are exothermic reactions. The following steam reforming reaction is endothermic reaction and after the reaction, system enthalpy is increased. The steam reforming reaction is reaction for producing a fuel gas (hydrogen) by putting methanol or hydrocarbon in contact with steam and decomposing the methanol or hydrocarbon. This hydrogen is used for various industrial purposes, including a fuel of a fuel cell mentioned later, etc. Hereinbelow, the conventional steam reforming techniques will be described.

As disclosed in Publication of Unexamined Patent Application No. Hei. 5 - 15778, a catalyst with platinum and/or palladium carried (loaded) on a substrate having a porous-alumina-coated surface is known as a catalyst of a heat exchange type methanol reformer having a catalyzed metal surface. However, since these VIII-group metal catalysts require high reaction temperatures around 450°C because they have less activity for methanol reforming. Besides, by-product of carbon monoxide resulting from the decomposition of methanol is great. The carbon monoxide is a catalyst poison to an electrode catalyst of the polymer electrolyte fuel cell. When the VIII-group metal catalysts are incorporated into the reformer for fuel cell, a large-scale carbon monoxide shift converter and carbon monoxide remover are needed.

The method of carrying catalyst metal on an oxide layer of aluminum, stainless steel, copper or the like, includes immersing a substrate having an oxidized metal surface in a metal salt aqueous solution. In actuality, however, when aluminum is used as the substrate, many catalyst metals have ionization tendency less than that of aluminum, and in general, in an aqueous solution of an inorganic salt such as nitrate and chloride which are used for carrying the catalyst, catalyst metal is generally converted into metal cations. So, if the aluminum substrate is immersed in this aqueous solution, ion exchange between aluminum and catalyst metal occurs on the surface of an aluminum exposed region such as the cracks of the oxidization film and the cut surface of the metal substrate, and metal of catalytic component is deposited and aggregated. Consequently, it was impossible to carry the catalyst uniformly and in a well-dispersed condition.

Therefore, conventionally, when noble metal such as platinum or palladium is carried, metal salt of chloroplatinic or the like in which metal is converted into anions is used, or otherwise an ammine complex of palladium or the like is formed by addition of ammonia. On the other hand, non-noble (base) metal such as copper or nickel is difficult to carry, because hydroxide is deposited if PH is increased.

As mentioned above, the catalyst with platinum, palladium or the like carried on the substrate has been conventionally used as the catalyst for the heat exchange type methanol reformer having the catalyzed metal surface. These catalysts have problems associated with catalytic activity, and by-product of carbon monoxide or the like.

Also, in the case where the catalyst metal is carried on the oxidation film of aluminum or the like, if the substrate of aluminum or the like is immersed in the aqueous solution of a strong electrolyte such as nitrate or chloride, then metal of the catalytic component is inevitably deposited or aggregated because the degree of salt dissociation in the aqueous solution of the strong electrolyte is large.

Meanwhile, as the catalyst for steam reforming reaction of methanol, copper is superior in catalytic activity, and enables reduction of by-product of carbon monoxide resulting from decomposition of methanol. In the above catalyst carrying method, however, metal copper is deposited or aggregated and it is therefore impossible to carry copper in a well-dispersed condition and uniformly.

The first invention has been made in view of the above-mentioned problems, and a first objective to be achieved by the first invention is to provide a catalyst for endothermic reaction represented by steam reforming reaction, and a production method thereof, in which a porous oxidation film is provided on a surface of a metal substrate made of at least one of as aluminum, aluminum alloy, stainless steel, and copper, which comprises one of shapes including a plate, a tube, a tube with fin, a corrugated plate, and a plate with fin, the catalyst metal is carried thereon in a well-dispersed condition and uniformly, and the catalyst is active at relatively low temperatures.

The first objective is to provide a catalyst for steam reforming reaction of methanol or hydrocarbon, and a production method thereof, in which a porous oxidation film is provided on a surface of a metal substrate made of at least one of aluminum, aluminum alloy, stainless steel, and copper, which comprises one of shapes including a plate, a tube, a tube with fin, a corrugated plate, and a plate with fin, and copper catalyst with high catalytic activity is carried thereon in a well-dispersed condition and uniformly by using a catalyst carrying method resulting in no deposition or aggregation of metal copper, and the catalyst is active at relatively low temperatures and enables reduction of by-product of carbon monoxide as a catalyst poison to the electrode catalyst of the polymer electrolyte fuel cell. Further, the first objective is to provide the catalyst for steam reforming reaction of methanol or hydrocarbon capable of improving catalytic activity and reducing by-product of carbon monoxide or the like by addition of zinc, manganese, chromium, nickel, iron, cobalt, ruthenium, rhodium, palladium, platinum, gold, silver, magnesium, calcium, lanthanum, titanium, zirconium, yttrium, cerium, or the like, to the copper catalyst, and a production method thereof. Moreover, the first objective is to provide a method of producing the catalyst for steam reforming reaction of methanol or hydrocarbon, which is capable of inhibiting deposition of basic copper acetate by addition of weak acid to a copper acetate aqueous solution used for carrying a copper catalyst.

2. Prior Art and Second Objective

The steam reforming reaction of methanol or hydrocarbon is the endothermic reaction as given by the following formulae:

$$CH_3OH + H_2O \rightarrow CO_2 + 3H_2 + 50.2 \text{ kJ/mol}$$

$$CH_4 + H_2O \rightarrow CO + 3H_2 + 206.2 \text{ kJ/mol}$$

Therefore, a heat source is necessary for promoting the steam reforming reaction as the endothermic reaction. Accordingly, the second objective to be achieved by the second invention is to provide a catalyst for promoting the exothermic reaction for supplying the heat source necessary for the endothermic reaction represented by the steam reforming reaction and the production method thereof.

3. Prior Art and Third Objective

Among fuel cells without harmful exhaust gases and with high power generation efficiency and low noise, attention is currently paid to the polymer electrolyte fuel cell which has high power density (0.3 $W/cm^2$ or higher) and long lifetime, and operates at low temperatures (room temperature to $100°C$), and high-performance ion exchange films have been developed in Japan, U.S, and Europe. The use of hydrogen resulting from the steam reforming reaction of methanol or hydrocarbon as a fuel of the polymer electrolyte fuel cell is promising in industry.

The polymer electrolyte fuel cell is structured such that thin porous platinum catalyst electrodes of 10 to 30 $\mu$m are provided on opposite sides of an ion exchange film as an electrolyte, which has proton ($H^+$) conductivity and is approximately $100\mu$m. The cell is operated at temperatures around room temperature to $100°C$ while supplying hydrogen or a reformed hydrogen-rich gas to one of the electrodes and oxygen or air to the other electrode. In this case, the poisoning of the platinum catalyst by carbon monoxide is problematic to the polymer electrolyte fuel cell operating at low temperatures. A minute amount of carbon monoxide as little as approximately 100 ppm sometimes significantly degrades cell characteristics.

Accordingly, the third objective to be achieved by the third invention is to provide a catalyst for promoting water-gas-shift reaction and selective oxidation reaction of carbon monoxide, for the purpose of eliminating carbon monoxide contained in the reformed gas, and a production method thereof.

4. Prior Art and Fourth Objective

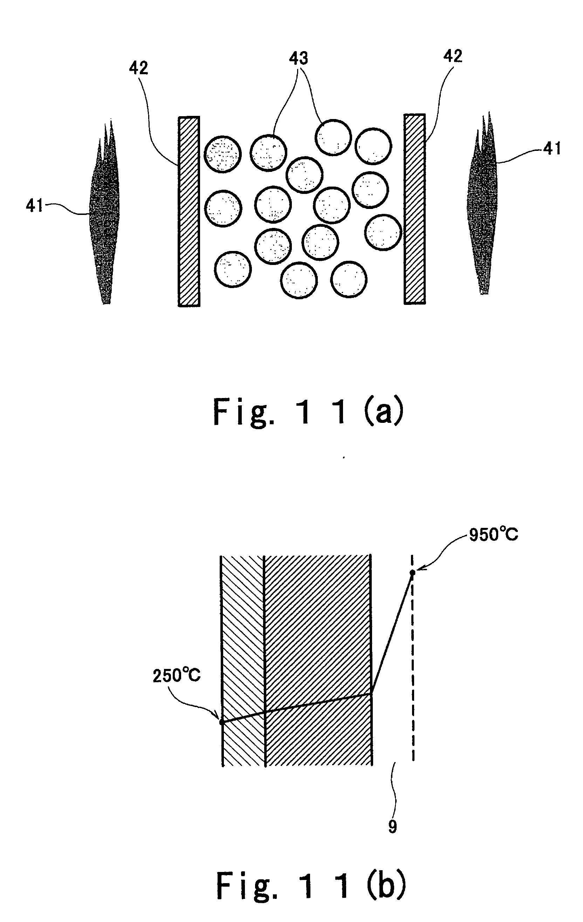

As described above, since the steam reforming reaction is the endothermic reaction, it is necessary to supply the heat source from outside for promoting the reaction. As the heat source of the conventional reactor using the catalyst, as shown in Fig. 11(a), a heat of a high-temperature gas generated by a burner 41 or a combustion furnace is transferred to a catalytic layer 43 through a separating wall 42. Since this heat is transferred by radiation or convection, its heat transfer efficiency is low. In addition, response speed to load fluctuation caused by composition variation of the fuel gas is slow. When the steam reformer is employed as equipment for producing a fuel of a fuel cell for a battery-driven automobile or an emergency power supply, these problems presents major obstacles.
Accordingly, the fourth objective to be achieved by the fourth invention is to provide a plate-fin heat exchange type reformer with high heat transfer efficiency.

[**Disclosure of the Invention**]

1. First Invention

To achieve the first objective, there is provided a catalyst for endothermic reaction represented by steam reforming reaction in accordance with the first invention, comprising a metal substrate made of at least one of aluminum, aluminum alloy, stainless steel, and copper, which is provided with a porous oxidation film on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow metal or metal oxide exhibiting catalytic action to be carried on the porous oxidation film of the metal substrate. Also, a catalyst for endothermic reaction represented by steam reforming reaction in accordance with the first invention comprises, a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an organic solvent solution of a metal compound and then calcined, to thereby allow metal or metal oxide exhibiting catalytic activity to be carried on the porous oxide layer of the metal substrate. Further, a catalyst for endothermic reaction represented by the steam reforming reaction in accordance with the first invention, comprises a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an aqueous solution of a metal compound of a weak electrolyte with small degree of salt dissociation and then calcined, to thereby allow metal or metal oxide exhibiting catalytic activity to be carried on the porous oxide layer of the metal substrate. Furthermore, a catalyst for endothermic reaction represented by the steam reforming reaction in accordance with the first invention, comprises a metal substrate made of least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an organic solvent solution of a metal compound and then calcined, to thereby allow metal or metal oxide exhibiting catalytic action to be carried on the porous oxide layer of the metal substrate. In the catalyst for steam reforming reaction of methanol or hydrocarbon in accordance with the first invention, the metal or metal oxide exhibiting catalytic action of the catalyst for endothermic reaction, is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.
A method of producing a catalyst for endothermic reaction represented by the steam reforming reaction in accordance with the first invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate. Also, a method of producing a catalyst for endothermic reaction represented by the steam reforming reaction in accordance with the first invention, comprises providing a porous oxide layer on a surface of the metal substrate made of at least one of aluminum, aluminum alloy, stainless steel, and copper, which comprises one of shapes including a plate, a tube, a tube with fin, a corrugated plate, and a plate with fin, immersing the metal substrate in an organic solvent solution of a metal compound and then calcining the metal substrate, thereby carrying (loading) metal or metal oxide exhibiting catalytic activity on the porous oxide layer of the metal substrate. Further, a method of producing a catalyst for endothermic reaction represented by the steam reforming reaction in accordance with the first invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, hydrating the metal substrate, immersing the hydrated metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate. Furthermore, a method of producing a catalyst for endothermic reaction represented by the steam reforming reaction in accordance with the first invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, and a plate with fin, hydrating the metal substrate, immersing the hydrated metal substrate in an organic solvent solution of a metal compound, and then calcining the metal substrate, thereby carrying metal or metal oxide exhibiting catalytic activity on the porous oxide layer of the metal substrate. In the method of producing the catalyst for steam reforming reaction of methanol or hydrocarbon in accordance with the first invention, the metal or metal oxide exhibiting catalytic activity of the catalyst for endothermic reaction, is copper or copper oxide, and metal or metal oxide of at least one of zinc, chromium, manganese nickel, iron, cobalt, ruthenium, rhodium, palladium, platinum, gold, silver, magnesium, calcium, lanthanum, titanium, zirconium, yttrium, and cerium.

It is preferable that in the method of producing the catalyst for steam reforming reaction of methanol or hydrocarbon, when the metal substrate provided with the porous oxide layer on the surface thereof is immersed in the copper acetate aqueous solution as the aqueous solution of the weak electrolyte with small degree of salt dissociation, in order to carry the copper catalyst, weak acid would be added to the copper acetate aqueous solution to inhibit precipitation of the basic copper acetate.

Specific effects attained by the first invention will be described in detail in embodiments mentioned later. Summary of the first invention is as follows.

(1) To carry the catalyst, the method of immersing the metal substrate in the aqueous solution of the metal compound of the weak electrolyte is employed.

First, in order to form the porous oxide layer on the surface of the metal substrate, anodic oxidation is employed for aluminum or aluminum alloy, and high-temperature calcination, flame spray coating of oxide, or coating using a sol gel method is employed for stainless steel, copper, or the like, or otherwise, oxidation film forming methods other than the above, may be employed. The shape of the metal substrate may be selected from various types of shapes including a plate, a tube, a tube with fin, a corrugated plate, a plate with fin, etc, for use in a heat exchange type methanol or hydrocarbon reformer with heat conductivity higher than that of the packed bed. The metal substrate is energized in the aqueous solution (e.g., 15 to 25°C) of oxalic acid, sulfuric acid, or chromium acid at a current density of 13 to 100A/$m^2$ for 4 to 24 hours, thus conducting anodic oxidation. The resulting metal substrate is calcined to be produced into the metal substrate provided with the porous oxide layer on the surface thereof.

The metal substrate provided with the porous oxide layer on the surface thereof, is immersed in the aqueous solution of the copper acetate or the like as the metal compound of the weak electrolyte. The temperature of the aqueous solution is elevated from room temperature up to, e.g., 80°C at a rate of 1 to 5 °C/min. The metal substrate is kept at 80°C for about 1 hour. The deposition or aggregation of metal does not occur in the aqueous solution of the weak electrolyte such as the copper acetate aqueous solution, because of small degree of salt dissociation. In case of using the aqueous solution of copper acetate, the basic copper acetate is precipitated at temperatures above about 60°C, and therefore, the weak acid such as acetic acid is added to inhibit such precipitation.

Then, the metal substrate is taken out from the aqueous solution and calcined at. e.g., 300 to 400°C for 3 hour, thereby obtaining the catalyst with carried copper or copper oxide. The resulting catalyst is reduced using hydrogen or the like, thereby obtaining the copper catalyst.

This copper catalyst is active at relatively low temperatures and enables reduction of by-product of carbon monoxide resulting from decomposition of methanol. Also, since almost all of methanol is steam-reformed, hydrogen and carbon dioxide are produced in great quantities.

In particular, when a gas mixture of water and methanol with water to methanol molar ratio of 1 to 2.5, preferably 1.25 to 2. 0 is reacted, by-product of carbon monoxide, dymethyl ether, or the like, can be effectively inhibited.

In the aforementioned method, when copper (or copper oxide), and metal or metal oxide of zinc, chromium, manganese, nickel, iron, cobalt, ruthenium, rhodium, palladium, platinum, gold, silver, magnesium, calcium, lanthanum, titanium, zirconium, yttrium, cerium, or the like, is carried on the porous oxide layer of the metal substrate, the metal substrate is immersed in a mixed aqueous solution of a copper acetate aqueous solution and a zinc acetate aqueous solution, or in each of the copper acetate aqueous solution and the zinc acetate aqueous solution, thereby producing a catalyst with carried copper or zinc.

The addition of zinc or the like to the copper catalyst further improves catalytic activity and reduces by-product of carbon monoxide or the like.

(2) To carry the catalyst, the method of immersing the metal substrate in an organic solvent solution of the metal compound is employed.

First, the porous oxide layer is formed on the surface of the metal substrate made of at least one of aluminum, aluminum alloy, stainless steel, and copper. To form the porous oxide layer on the surface of the metal substrate, the above-mentioned methods may be employed. The shape of the metal substrate may be selected from various types of shapes including a plate, a tube, a tube with fin, a corrugated plate, a plate with fin, etc, for use in a heat exchange type methanol or hydrocarbon reformer with heat conductivity higher than that of the packed bed.

The metal substrate is energized in the aqueous solution (e.g., 15 to 25°C) of oxalic acid, sulfuric acid, chromic acid at a current density of 13 to 100A/m$^2$ for 4 to 24 hours, thus conducting anodic oxidation. The resulting metal substrate is calcined to be produced into the metal substrate provided with the porous oxide layer on the surface thereof.

Following this, the metal substrate provided with the porous oxide layer on the surface thereof is hydrated to increase a specific surface area of the oxide layer. Specifically, the metal substrate provided with the porous oxide layer on the surface thereof is immersed in water of , e.g., 40 to 100°C for about 1 hour and dried at room temperature. Thereafter, the metal substrate is calcined at 300 to 600°C for about 3 hour. As a result, alumina hydrate is produced, when the oxide layer is an alumina coating. In this case, the pores formed after elimination of hydrated water by calcination have a diameter by far finer than that of the pores formed by the anodic oxidation, and consequently, the oxide layer with high porosity and large surface area is obtained.

The metal substrate provided with the porous oxide layer having these fine pores is immersed in a solution obtained by dissolving a copper compound (e.g., chloride or acetate, and its type is not limited ) in an organic solvent such as acetone, ethanol, or methanol, for e.g., 5 to 96 hours and thereafter calcined at 300 to 500°C for about 3 hours, thereby obtaining a catalyst with carried copper or copper oxide. By reducing the catalyst using hydrogen or the like, the copper catalyst with the copper dispersed uniformly over the numerous fine pores, which has a large surface area and is well active, is obtained.

By thus dissolving the metal compound in the organic solvent rather than water, the deposition or aggregation of metal does not occur if the metal substrate is immersed in the organic solvent solution.

In the aforementioned method, when copper (or copper oxide), and metal or metal oxide of zinc, chromium, manganese nickel, iron, cobalt, ruthenium, rhodium, palladium, platinum, gold, silver, magnesium, calcium, lanthanum, titanium, zirconium, yttrium, cerium, or the like, are carried on the porous oxide layer of the metal substrate, the metal substrate is immersed in a mixed organic solvent solution of a copper compound organic solvent solution and a zinc compound organic solvent solution, or in each of the copper compound organic solvent solution and the zinc compound organic solvent solution, thereby producing a catalyst with carried copper and zinc.

2. Second Invention

To achieve the second objective, there is provided a catalyst for exothermic reaction represented by combustion reaction in accordance with the second invention, comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow metal or metal oxide exhibiting catalytic activity to be carried on the porous oxide layer of the metal substrate. Also, a catalyst for exothermic reaction represented by combustion reaction in accordance with the second invention, comprises a metal substrate made of at least one of aluminum, aluminum alloy, stainless steel, and copper, which is provided with a porous oxide layer on a surface thereof and comprises one of shapes of a plate, a tube, a tube with fin, a corrugated plate, and a plate with fin, the metal substrate being immersed in an organic solvent solution of a metal compound and then calcined, to thereby allow metal or metal oxide exhibiting catalytic activity to be carried on the porous oxide layer of the metal substrate. Further, a catalyst for exothermic reaction represented by the combustion reaction in accordance with the second invention, comprises a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an aqueous solution of a metal compound of a weak electrolyte with small degree of salt dissociation and then calcined, to thereby allow metal or metal oxide exhibiting catalytic activity to be carried on the porous oxide layer of the metal substrate. Furthermore, a catalyst for exothermic reaction represented by combustion reaction in accordance with the second invention, comprises a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an organic solvent solution of a metal compound and then calcined, to thereby allow metal or metal oxide exhibiting catalytic activity to be carried on the porous oxide layer of the metal substrate. In the catalyst for combustion reaction in accordance with the second invention, the metal or metal oxide exhibiting catalytic activity of the catalyst for exothermic reaction is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

A method of producing a catalyst for exothermic reaction represented by combustion reaction in accordance with the second invention comprises: providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate. Also, a method of producing a catalyst for exothermic reaction represented by combustion reaction in accordance with the second invention, comprises: providing a porous oxide layer on a surface of the metal substrate made of at least one of aluminum, aluminum alloy, stainless steel, and copper, which comprises one of shapes including a plate, a tube, a tube with fin, a corrugated plate, and a plate with fin, immersing the metal substrate in an organic solvent solution of a metal compound and then calcining the metal substrate, thereby carrying (loading) metal or metal oxide exhibiting catalytic activity on the porous oxide layer of the metal substrate. Further, a method of producing a catalyst for exothermic reaction represented by combustion reaction in accordance with the second invention, comprises: providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, hydrating the metal substrate, immersing the hydrated metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate. Furthermore, a method of producing a catalyst for exothermic reaction represented by combustion reaction in accordance with the second invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, hydrating the metal substrate, immersing the hydrated metal substrate in an organic solvent solution of a metal compound, and then calcining the metal substrate, thereby carrying metal or metal oxide exhibiting catalytic activity on the porous oxide layer of the metal substrate. In the method of producing the catalyst for combustion reaction in accordance with the second invention, the metal or metal oxide exhibiting catalytic activity of the catalyst for exothermic reaction is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

According to the second invention, the reaction heat can be generated in the combustion reaction as follows and utilized as the heat source of the endothermic reaction (e.g., steam reforming reaction).

$$H_2 + 1/2O_2 \rightarrow H_2O \text{ --- } 241.8 \text{ kJ/mol}$$

$$CH_4 + 3/2O_2 \rightarrow CO + 2H_2O \text{ --- } 802.3 \text{ kJ/mol}$$

$$CH_3OH + 3/2O_2 \rightarrow CO_2 + 2H_2O \text{ --- } 675.3 \text{ kJ/mol}$$

3. Third Invention

To achieve the third objective, there is provided a catalyst for water-gas-shift reaction in accordance with the third invention, comprising: a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as catalyst metal on the porous oxide layer of the metal substrate. Also, in the catalyst for water-gas-shift reaction in accordance with the third invention, the aqueous solution of the metal compound of the weak electrolyte with small degree of salt dissociation is replaced by the organic solvent solution of the metal compound.

A method of producing a catalyst for water-gas-shift reaction in accordance with the third invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying (loading) copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as catalyst metal on the porous oxide layer of the metal substrate.

Also, in the method of producing the catalyst for water-gas-shift reaction in accordance with the third invention, the aqueous solution of the metal compound of the weak electrolyte with small degree of salt dissociation is replaced by the organic solvent solution of the metal compound.

A catalyst for selective oxidation reaction of carbon monoxide in accordance with the third invention, comprises: a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as the catalyst metal on the porous oxide layer of the metal substrate. Also, in the catalyst for selective oxidation reaction of carbon monoxide in accordance with the third invention, the aqueous solution of the metal compound of the weak electrolyte with small degree of salt dissociation is replaced by the organic solvent solution of the metal compound.

A method of producing a catalyst for selective oxidation of carbon monoxide in accordance with the third invention, comprises providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying (loading) copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as the catalyst metal on the porous oxide layer of the metal substrate. Also, in the method of producing the catalyst for selective oxidation reaction of carbon monoxide in accordance with the third invention, the aqueous solution of the metal compound of the weak electrolyte with small degree of salt dissociation is replaced by the organic solvent solution of the metal compound.

According to the third invention, carbon monoxide is eliminated by the water-gas-shift reaction as given by the following formula and hydrogen is obtained:

$$CO + H_2O \rightarrow CO_2 + H_2$$

Also, carbon monoxide contained in the reformed gas can be eliminated by the selective oxidation reaction of carbon monoxide as given by the following formula:

$$CO + 1/2O_2 \rightarrow CO_2$$

4. Fourth Invention

To achieve the fourth objective, there is provided a plate-fin heat exchange type reformer comprising a heat exchange element having a first plate catalyst for combustion reaction on one of surfaces of a separating wall, and a second plate catalyst comprised of a catalyst for steam reforming reaction, a catalyst for water-gas-shift reaction, and a catalyst for selective oxidation reaction of carbon monoxide arranged on the other surface of the separating wall along the direction in which a gas flows, wherein the first plate catalyst and the first plate catalyst are provided with fin forming a gas flow passage interposed therebetween, and the second plate catalyst and the second plate catalyst are provided with the fin forming the gas flow passage interposed therebetween.

According to the fourth invention, the heat generated in the combustion reaction of the gas flow passage between the first plate catalyst and the first plate catalyst is smoothly transferred to the second plate catalyst through the separating wall. Also, the gas for steam reforming introduced into the gas flow passage between the second plate catalyst and the second plate catalyst, is subjected to a reforming process at proper temperature utilizing the above reaction heat as the heat source of the steam reforming reaction and then the water-gas-shift reaction and the selective oxidation reaction of carbon monoxide. As a result, a hydrogen-rich reformed gas substantially free from carbon monoxide is obtained.

It is preferable that pitches of the fin provided so as to form the gas flow passages between the first plate catalyst and the first plate catalyst and between the second plate catalyst and the second plate catalyst would be set in such a manner that the pitch of the fin provided between the first plate catalyst and the first plate catalyst is made longer so as to reduce a total cross-sectional area of the gas flow passage and the pitch of the fin provided between the second plate catalyst and the second plate catalyst is made shorter so as to increase the total cross-sectional area of the gas flow passage. The reason for this will be mentioned later. It is also preferable that the catalyst for combustion reaction would be set less in carried amount than the catalyst for steam reforming reaction.

Further, it is preferable that a noble metal based reforming catalyst would be provided in the vicinity of an inlet of the reformer and a non-noble metal oxide based reforming catalyst would be provided on the side of an outlet of the reformer.

Furthermore, it is preferable that the noble metal based reforming catalyst and the non-noble metal oxide based reforming catalyst would be gradationally placed such that a mixing ratio of these catalysts is gradually changed.

Moreover, it is preferable that the gas for combustion reaction would be introduced into the reformer through a plurality of spots of the reformer.

The present invention has the above-mentioned constitution and has the following effects.

1. The first invention provides the remarkable effects as follows.

(1) Since copper can be well carried without deposition or aggregation of metal copper, it is possible to attain a catalyst for steam reforming reaction of methanol or hydrocarbon, which is active at relatively low temperatures, and promotes the steam reforming reaction of methanol or hydrocarbon to produce hydrogen and carbon dioxide in great quantities without by-product of carbon monoxide resulting from decomposition of methanol. Also, when the catalyst is used as a hydrogen generator for a polymer electrolyte fuel cell, by-product of carbon monoxide as a catalyst poison to the electrode catalyst is less. Therefore, a carbon monoxide shift converter or carbon monoxide remover can be small-sized.

(2) By immersing the metal substrate in the aqueous solution of the metal compound of the weak electrolyte with small degree of salt dissociation, it is possible to obtain a catalyst carried uniformly and in a well-dispersed condition without deposition and aggregation of the metal of the catalytic component.

(3) By immersing the metal substrate in the organic solvent solution of the metal compound, it is possible to obtain a catalyst carried uniformly and in a well-dispersed condition without deposition and aggregation of the metal of the catalytic component.

(4) By adding zinc, chromium, manganese, nickel, iron, cobalt, ruthenium, rhodium, palladium, platinum, gold, silver, magnesium, calcium, lanthanum; titanium, zirconium, yttrium, cerium, or the like, to the copper catalyst, catalytic activity can be further enhanced. Besides, by-product of carbon monoxide, dimethyl ether, or the like can be reduced.

(5) By adding weak acid to the copper acetate aqueous solution used for carrying the copper catalyst, the deposition of basic copper acetate can be inhibited without degrading strength of a catalytic surface (oxide layer). As a result, the catalyst need not be cleaned and the copper aqueous solution can be re-used.

(6) Copper or the like is non-noble metal, and therefore is more inexpensive than platinum, palladium, or the like as the noble metal.

(7) Since hydration provides the porous oxide layer having pores with fine diameter on the metal substrate, it is possible to obtain a metal catalyst dispersed in an improved condition and having large surface area and superior activity.

2. The second invention has the following remarkable effects.

In combustion by the burner, when the fuel composition fluctuates, the combustion is difficult to stabilize. On the other hand, according to the second invention, the temperature of the catalytic layer is elevated by using an appropriate heat source and thereafter the gas difficult to stably combust can be combusted by the catalyst combustion reaction. Also, the resulting heat generated by the reaction can be utilized as a heat source of another reaction, e.g., endothermic reaction.

3. The third invention has the following remarkable effects.

Carbon monoxide contained in the reformed gas can be eliminated in the water-gas-shift reaction and the selective oxidation reaction of carbon monoxide, and therefore, a high-quality (with high hydrogen concentration) reformed gas can be obtained.

4. The fourth invention has the following remarkable effects.

(1) The conventional reforming reactor that fills the reforming catalyst therein and heats the catalyst by using the burner or the like outside of the reactor is adapted to transfer heat by convection or radiation. Such reformer has low heat transfer efficiency and is incapable of conducting stable combustion if the composition of the fuel gas fluctuates. On the other hand, according to the present invention, the temperature of catalytic layer for combustion reaction is elevated by using an appropriate heat source to enable the gas difficult to stably combust to be combusted by the catalytic reaction, and the resulting heat generated in the reaction can be transferred to the side of reforming reaction by heat transfer through the separating wall. As a result, heat transfer efficiency is high. Also, since carbon monoxide contained in the reformed gas can be eliminated almost perfectly, a high-quality reformed gas is obtained.

(2) The pitch of the fin provided between the first plate catalyst and the first plate catalyst is made longer so as to reduce the total cross-sectional area of the gas flow passage and the pitch of the fin provided between the second plate catalyst and the second plate catalyst is made shorter so as to increase the total cross-sectional area of the gas flow passage. With this constitution, since the amount of gas for combustion reaction and the amount of the catalyst for combustion reaction carried on the fin can be relatively reduced and the combustion reaction whose reaction rate is normally quick can be inhibited, the heat balance between the combustion reaction and the reforming reaction can be kept. By setting the catalyst for combustion reaction less in carried amount than the catalyst for steam reforming reaction, the progress of the combustion reaction can be inhibited and the heat balance between the combustion reaction and the reforming reaction can be kept.

(3) By providing the noble metal based reforming catalyst having low ignition temperature and high activity in the vicinity of an inlet of the reformer and a non-noble metal oxide based reforming catalyst having low activity on the side of an outlet of the reformer, the variation of temperature in the reformer can be reduced. Also, by gradationally placing the noble metal based reforming catalyst and the non-noble metal oxide based reforming catalyst such that a mixing ratio of these catalysts is gradually changed, the variation of temperature in the reformer can be further reduced.

(4) By introducing the gas for combustion reaction into the reformer from a plurality of spots of the reformer, the reformer is less likely to be affected by fluctuation of the flow of the combustion gas with progress of the reaction.

[**Brief Description of the Drawings**]

Fig. 1 is a flow chart showing a method of preparing a catalyst by an organic solvent metal salt solution in an example 1 of the first invention and a contrast;

Fig. 2 is a flow chart showing a method of preparing a catalyst (copper catalyst) for methanol reforming in an example 2 of the first invention;

Fig. 3 is a graph showing the relationship between a molar ratio of water to methanol and catalytic activity in the example 2 of the first invention;

Fig. 4 is a graph showing the relationship between content of zinc and catalytic activity as the result of addition of zinc to the copper catalyst in an example 3 of the first invention;

Fig. 5 is a graph showing the relationship between content of copper and catalytic activity with/without hydration in an example 4 of the first invention;

Fig. 6 is a graph showing the relationship between flow of a reaction gas and catalytic activity in examples of the second invention and contrasts;

Fig. 7(a) is a cross-sectional view for showing placement of plate catalysts constituting a plate-fin heat exchange type reformer of the fourth invention and Fig. 7(b) is a view showing an example of temperature distribution of the plate catalysts in the direction orthogonal to the direction in which the gas flows;

Fig. 8(a) is a plan view of a plate-fin heat exchange type reformer of the fourth invention and Fig. 8(b) is a side view thereof;

Fig. 9(a) is an enlarged view of a cross section taken in the direction of arrows substantially along line A - A of Fig. 8(a), Fig. 9(b) is an enlarged view of a cross section taken in the direction of arrows substantially along line B - B of Fig. 8 (a), and Figs. 9(c), 9 (d) are views showing an example of placement of fin;

Fig. 10 is a flowchart showing an example where the plate-fin heat exchange type reformer of the fourth invention is used as a methanol reformer of fuel cell generating equipment; and

Fig. 11(a) is a view showing a schematic constitution of the conventional reformer, and Fig. 11 (b) is a view showing an example of temperature distribution of the reformer in the direction orthogonal to the direction in which a gas flows.

[**Best Mode for Carrying Out the Invention**]

Hereinafter, embodiments of the present invention will be described. The present invention is not limited to the embodiments described below but may be suitably altered and carried out.

1. Embodiments of the First Invention

(Example 1 and Contrast 1: Preparation of a Catalyst by an Acetone Solution)

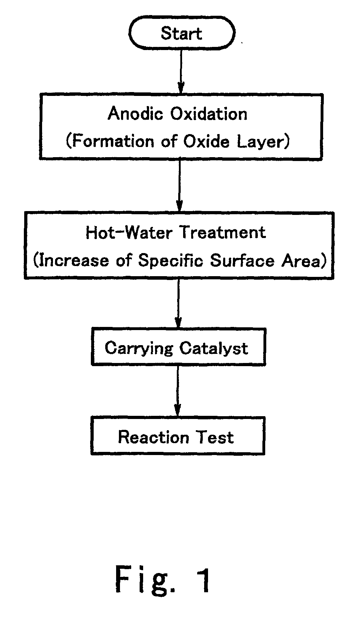

Following the procedure of Fig. 1, the catalyst was produced by using an acetone solution. First, an aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After this process, the aluminum plate was energized in an oxalic acid aqueous solution (20°C ) with 4 weight % concentration at a current density of 25 A/m$^2$, for 16 hours, thus conducting anodic oxidation. Then, the aluminum plate was calcined at 350°C in air for 1 hour and cut to have a size of 5 cm×10 cm. The cut aluminum plates were immersed in water of 80°C for 1 hour and dried at room temperature. Then, the aluminum plates were calcined at 400°C in air for 3 hours. The calcined aluminum plates had a BET specific surface area of about 14000 m$^2$/m$^2$ per outer surface area and its oxidation layer was approximately 50 μm thick. Then, the cut aluminum plates were immersed for 24 hours in respective solutions in which various types of metal salts illustrated in TABLE 1 were dissolved in acetone to have a concentration of 0.002 mol/liter, and were calcined at 400°C in air for 3 hours, thus carrying catalytic metal. The deposition and aggregation of metal on the surface of the aluminum plate was not observed. Copper chloride (CuCl$_2$) was used in the example of the present invention and the other metal salts were used in the contrast.

Next, these catalysts were cut to have a size of 5 mm×5mm, and the catalysts having a surface area of 24 cm$^2$ were put into reaction tubes having an inner diameter of 1 cm. The catalysts were reduced by a reducing gas (a gas mixture of 10% hydrogen and 90 % nitrogen) of 1250 ml/min. The reducing temperature was 400°C and the reducing time was 2 hours. After this process, the gas mixture of water and methanol with water to methanol molar ratio of 1 was flowed into the reaction tubes at a flow of 200 ml/min. The results of product gas compositions are listed in TABLE 1. The reaction temperature was 250°C. It should be noted that the cutting of the catalysts was conducted for the sake of performance evaluation of the catalysts and their shapes are not limited in practice.

As apparent from the gas compositions of TABLE 1, copper is suitable as the catalyst for steam reforming reaction of methanol, because copper makes it possible that by-product of carbon monoxide resulting from decomposition of methanol is very little and most of product gas is hydrogen and carbon dioxide resulting from reaction between methanol and water. On the other hand, metals or the like of the other VIII-group makes by-product of carbon monoxide more, or otherwise makes the percentage of hydrogen very small.

〔TABLE 1〕

| Metal Salt | Content (g/m²) | Conversion (%) | Composition of Product Gas (%) | | | | | |
|---|---|---|---|---|---|---|---|---|
| | | | $H_2$ | $CO_2$ | CO | $CH_4$ | Dimethyl ether | Methyl formate |
| $RuCl_3 \cdot nH_2O$ | 2.2 | 4.06 | 66.09 | 0.59 | 29.24 | 0.053 | 3.01 | 1.01 |
| $H_2PtCl_6 \cdot 6H_2O$ | 4.4 | 6.94 | 67.93 | 7.64 | 21.53 | 1.29 | 0.92 | 0.68 |
| $CuCl_2$ | 3.0 | 1.29 | 69.13 | 17.04 | 2.42 | 0 | 6.75 | 4.67 |
| $AgNO_3$ | | 0.91 | 26.54 | 14.37 | 0 | 0 | 41.47 | 17.62 |
| $HAuCl_4 \cdot 4H_2O$ | | 0.67 | 7.13 | 0 | 0 | 0 | 60.46 | 32.41 |
| $Fe(NO_3)_3 \cdot 9H_2O$ | | 0.64 | 6.87 | 0 | 0 | 0 | 59.03 | 34.10 |
| $Co(NO_3)_2 \cdot 6H_2O$ | | 0.46 | 7.40 | 9.62 | 4.14 | 0 | 37.10 | 41.74 |
| $RhCl_3 \cdot 3H_2O$ | | 4.92 | 66.44 | 0.73 | 29.86 | 0.036 | 2.04 | 0.90 |
| $Pd(CH_3COO)_2$ | 4.0 | 12.3 | 67.47 | 0.45 | 31.21 | 0.078 | 0.49 | 0.30 |
| $Ni(NO_3)_2$ | 2.7 | 3.14 | 61.60 | 0.71 | 26.39 | 0 | 6.38 | 5.91 |

Here, conversion refers to a ratio (%) of " mol of a carbon-containing gas other than methanol in product gas " to "mol of supplied methanol".

(Example 2: Preparation of a Copper Catalyst by a Copper Acetate Aqueous Solution)

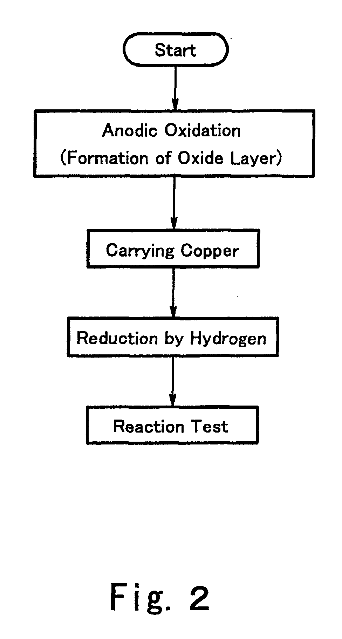

Following the procedure of Fig. 2, the catalyst was prepared. Specifically, an aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After the process, the aluminum plate was energized in an oxalic acid aqueous solution (20°C) with 4 weight % concentration at a current density of 25A/m$^2$, for 16 hours, thus conducting anodic oxidation. Then, the aluminum plate was calcined at 350°C in air for 1 hour and cut to have a size of 5 cm×10 cm. The cut aluminum plates were immersed in an aqueous solution with concentration of 0.01 to 0.2 mol / liter of copper acetate (pKa of acetic acid at 20°C = 4.56) as a copper compound of a weak electrolyte. Then, temperature was elevated from room temperature up to 80°C at a rate of 1 °C/min. The aluminum plates were kept at 80°C for 1 hour and then taken out. The deposition and aggregation of metal copper on the surfaces of the aluminum plates were not observed. Further, the aluminum plates were calcined at 400°C in air for 3 hours, thereby obtaining a catalyst with carried copper oxide. When the concentration of copper acetate aqueous solution was 0.01 mol/liter, carried-copper amount per apparent surface area was as little as 2.6 g/m$^2$, while when the concentrations were 0.1 mol/liter and 0.2 mol/liter, respectively, the corresponding amounts were 11 g/m$^2$ and 15 g/m$^2$, which were sufficient for catalyst activity.

Then, these catalysts were cut to have a size of 5 mm× 5 mm, and the catalysts having a surface area of 24 cm$^2$ were put into reaction tubes having an inner diameter of 1 cm. The catalysts were reduced by a reducing gas (a gas mixture of 10% hydrogen and 90% nitrogen) of 1250 ml/min. The reducing time was 2 hours.

The reducing temperature was changed as illustrated in TABLE 2. After this process, the gas mixture of water and methanol with water to methanol molar ratio of 1 was flowed into the reaction tubes at a flow rate of 200ml/min. The results of product gas compositions are listed in TABLE 2. The reaction temperature was 250°C. As can be seen from TABLE 2, when the carried-copper amounts are equal, reduction of copper was promoted and activity of the catalyst was enhanced (conversion was improved) by setting the reducing temperature to high temperatures (350°C or higher in TABLE 2).

Further, the catalysts having a surface area of 48 cm$^2$ were put into the reaction tubes and reduction was conducted at a temperature of 350°C for 2 hours by using the reducing gas with the above-identified flow rate and composition. After this process, the gas mixture of water and methanol with water to methanol molar ratio of 1 was flowed into the reaction tubes at a flow rate of 100ml/min. The test was conducted at temperatures illustrated in TABLE 3, which lists the results of product gas compositions. As can be seen from TABLE 3, activity of the catalyst was enhanced (conversion was improved) by setting the reaction temperature to high temperatures (300 to 350°C or higher in TABLE 3).

In TABLES 2, 3, DME represents dimethyl ether and MF represents methyl formate.

[TABLE 2]

| Copper acetate Concentration (mol/Liter) | Reducing Temperature (°C) | Reaction Temperature (°C) | Conversion (%) | Composition of Product Gas (%) | | | | | |
|---|---|---|---|---|---|---|---|---|---|
| | | | | $H_2$ | $CO_2$ | CO | $CH_4$ | DMF | MF |
| 0.01 | 350 | 250 | 1.59 | 65.22 | 15.27 | 1.54 | 0 | 19.26 | 4.72 |
| 0.1 | 250 | 250 | 1.10 | 76.24 | 18.87 | 0 | 0 | 0.66 | 4.23 |
| 0.1 | 300 | 250 | 1.44 | 74.07 | 18.91 | 2.30 | 0 | 1.16 | 3.56 |
| 0.1 | 350 | 250 | 8.05 | 76.0 | 23.4 | 0.06 | 0 | 0.12 | 0.40 |
| 0.1 | 400 | 250 | 6.27 | 76.0 | 23.2 | 0.11 | 0 | 0.17 | 0.50 |
| 0.2 | 350 | 250 | 9.48 | 76.1 | 23.2 | 0.2 | 0 | 0.07 | 0.33 |

[TABLE 3]

| Copper acetate Concentration (mol/Liter) | Reducing Temperature (°C) | Reaction Temperature (°C) | Conversion (%) | Composition of Product Gas (%) | | | | | |
|---|---|---|---|---|---|---|---|---|---|
| | | | | H₂ | CO₂ | CO | CH₄ | DMF | MF |
| 0.1 | 350 | 225 | 9.54 | 76.1 | 23.5 | 0.05 | 0 | 0.12 | 0.25 |
| 0.1 | 350 | 250 | 29.6 | 75.0 | 24.4 | 0.11 | 0 | 0.37 | 0.08 |
| 0.1 | 350 | 300 | 79.9 | 73.3 | 24.3 | 0.47 | 0.01 | 2.0 | 0.01 |
| 0.1 | 350 | 350 | 96.5 | 72.9 | 23.4 | 1.46 | 0.02 | 2.3 | 0 |

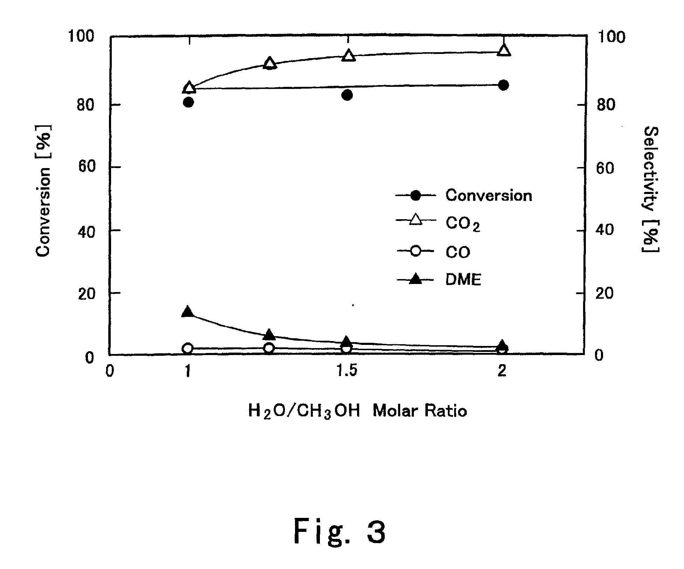

Moreover, the molar ratio of water to methanol of the gas mixture of water and methanol was changed and a reaction test was conducted for evaluation of activity. The results are illustrated in Fig. 3. In this case, the surface area of the catalysts put into the reaction tubes was set to 48 cm$^2$ and reduction was conducted under the above-identified conditions (flow rate and composition of reducing gas). The reducing temperature was 350°C and the reducing time was 2 hours. The flow rate of the gas mixture of water and methanol was 100 ml/min and the reaction temperature was 300°C. The percentages of hydrogen contained in product gas are illustrated in TABLE 4.

As should be understood from Fig. 3 and TABLE 4, when the water to methanol molar ratio is in the range of 1 to 2 (in particular, 1.25 to 2), the catalyst was well active, by-product of carbon monoxide (CO) or dimethyl ether (DME) was little, and most of product gases were hydrogen and carbon dioxide resulting from reaction between methanol and water.

In Fig. 3, selectivity refers to a ratio of "mol of carbon dioxide" to "mol of substances other than methanol in product gas", or a ratio of "mol of dimethyl ether" to "mol of substances other than methanol in product gas", or a ratio of "mol of carbon monoxide" to "mol of substances other than methanol in product gas".

[TABLE 4]

| H$_2$O/Methanol Molar Ratio | Percentage of H$_2$ in Product Gas (%) |
|---|---|
| 1 | 74.3 |
| 1.25 | 74.3 |
| 1.5 | 74.5 |
| 2 | 75.2 |

(Example 3: Addition of Zinc)

An anode-oxidized aluminum plate was immersed in a mixed aqueous solution containing a copper acetate aqueous solution with 0.1 mot/liter concentration and a zinc acetate aqueous solution with 0.01 to 0.05 mol/liter concentration, thus preparing a catalyst with carried copper and zinc. The procedure of producing the catalyst is identical to that of the example 2 except that the copper acetate aqueous solution was replaced by the mixed aqueous solution containing the copper acetate aqueous solution and zinc acetate aqueous solution. The amount of carried copper was about 10g/m$^2$ per apparent surface area.

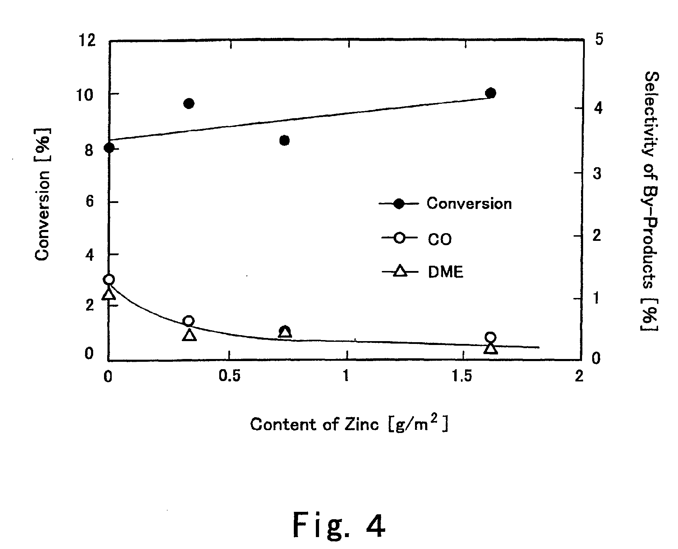

Then, the resulting catalyst was cut to have a size of 5 mm × 5mm, and the catalysts having a surface area of 24 cm$^2$ were put into reaction tubes having an inner diameter of 1 cm. The catalysts were reduced by using a reducing gas ( gas mixture of 10% hydrogen and 90% nitrogen) of 1250 ml/min. The reducing temperature was 350°C and the reducing time was 2 hours. After this process, the gas mixture of water and methanol with water to methanol molar ratio of 1 was flowed into the reaction tubes at a flow rate of 200 ml /min. The reaction test was conducted at reaction temperature of 250°C. The results are listed in Fig. 4. The percentages of hydrogen in product gas are illustrated in Table 5.

As can be seen from Fig. 4, the addition of zinc to the copper catalyst, improved conversion and reduced carbon monoxide (CO) and dimethyl ether (DME) as by-products.

[TABLE 5]

| Content of Zinc (g/m$^2$) | Percentage of H$_2$ in Product Gas (%) |
|---|---|
| 0 | 76.0 |
| 0.33 | 75.1 |
| 0.74 | 76.2 |
| 1.6 | 75.1 |

(Example 4: Inhibition of Precipitation of Basic Copper Acetate by Addition of Weak Acid)

When heating the copper acetate aqueous solution to temperature of around 60°C or higher, the basic copper acetate is generated and precipitated on the surface of the aluminum substrate, and it is therefore necessary to wash the catalyst. Besides, the reuse of the copper aqueous solution is impossible. Accordingly, to inhibit the deposition, nitric acid and acetic acid were added and the inhibition effect of precipitation was examined.

The catalyst was prepared according to the following procedure. Specifically, an aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After this process, the aluminum plate was energized in an oxalic acid solution (20°C) with 4 weight % concentration at a current density of 25A/m$^2$, for 16 hours, thus conducting anodic oxidation. Then, the aluminum plate was calcined at 350°C in air for 1 hour and cut to have a size of 5 cm×10 cm. The cut aluminum plates were immersed in an aqueous solution obtained by addition of nitric acid or acetic acid according to the amount shown in TABLE 6 to 700 ml of copper acetate aqueous solution with concentration 0.01 to 0.2 mol / liter. Then, temperature of the aqueous solution was elevated from room temperature to 80°C at a rate of 1 °C/min. The aluminum plates were kept at 80°C for 1 hour and then taken out. The observation results of the aqueous solution from which the cut aluminum plates have been taken out are illustrated in TABLE 6. As can be seen from TABLE 6, when nitric acid as strong acid was added in a given amount or more, the precipitation of basic copper acetate was inhibited, but a catalyst surface (oxidation layer) tended to be powdered and collapse because of reduced strength. On the other hand, when the acetic acid as weak acid was added in a given amount or more, the precipitation of the basic copper acetate can be inhibited without reduction of the strength of the catalyst surface (oxide layer).

[TABLE 6]

| Acid | Added amount (g) | Precipitation |
|---|---|---|
| Nitric Acid | 1 | Generation of precipitation |
| Nitric Acid | 2 | Generation of precipitation |
| Nitric Acid | 3 | No generation of precipitation<br>Degradation of strength of oxide layer |
| Nitric Acid | 4.3 | No generation of precipitation<br>Powdered surface and collapse of catalyst |
| Acetic acid | 1 | Generation of precipitation |
| Acetic acid | 2 | No generation of precipitation<br>No degradation of strength |
| Acetic acid | 3 | No generation of precipitation<br>No degradation of strength |

(Example 5: Hydration)

According to the following procedure, the catalyst was prepared. Specifically, an aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After this process, the aluminum plate was energized in an oxalic acid aqueous solution with 4 weight % concentration at a current density 25A/m$^2$, for 16 hours, thus conducting anodic oxidation. The average diameter of pores formed in the surface of the aluminum plate at this time was approximately 50 nm ($^{-9}$m). Thereafter, the aluminum plate was calcined at 350°C in air for 1 hour and cut to have a size of 5 cm×11 cm. The cut aluminum plates were immersed in 700ml of distilled water. The temperature was raised up to 80°C at a rate of 1°C /min. The aluminum plates were kept at 80°C for 1 hour and then taken out . As a result, alumina was hydrated and the pores exhibited tendency to be occluded. Then, the aluminum plates were dried in air and calcined at 400°C in air for 3 hours. Thereby, hydrated water was eliminated, the average diameter of the pores was as fine as approximately 4 nm, and the surface area was greatly increased. This means that the hydration greatly reduced the diameter of the pores from approximately 50 nm to approximately 4 nm.

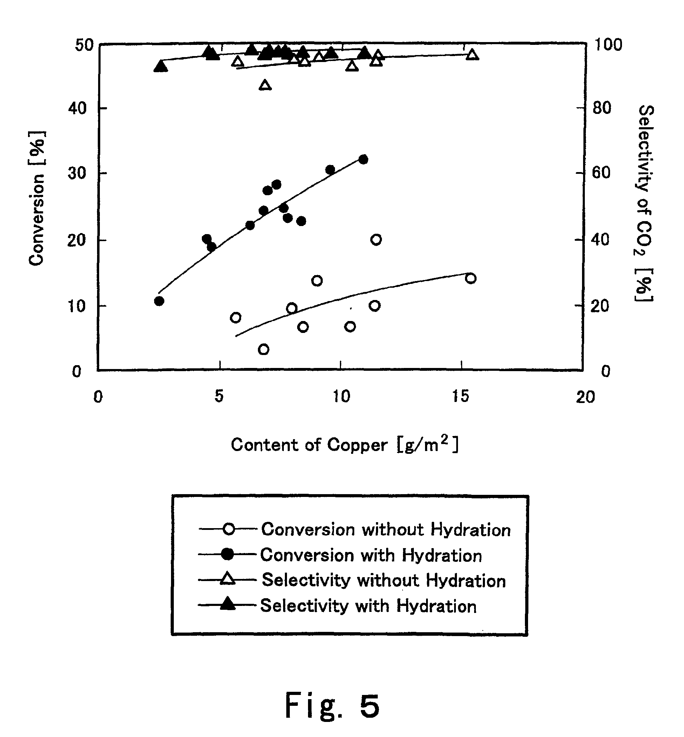

Then, the hydrated aluminum plates were immersed in 700 ml of copper acetate aqueous solution with 0.01 to 0.2 mol/liter concentration. The temperature was raised up to 80°C at a rate of 1 °C/min. The aluminum plates were kept at 80 °C for 1 hour and taken out. Then, the aluminum plates were dried at room temperature and calcined at 400°C in air for 3 hours, thereby obtaining a catalyst for methanol reforming. In a case where a porous metal substrate without hydration is immersed in a metal salt aqueous solution, since the metal salt aqueous solution enters the pores of 50 nm diameter, metal particles tends to be grown to be large-sized. On the other hand, since the pore diameter of the hydrated porous metal substrate is as fine as 4 nm, the amount of infiltrating metal salt aqueous solution is little when immersed in the metal salt aqueous solution, and therefore, the metal particles are not grown. Thus, since the catalytic metal is evenly dispersed over numerous fine pores in the hydrated metal substrate and a surface area thereof is increased, a metal catalyst with superior activity is obtained as shown in Fig. 5, which is mentioned later.

The catalyst for methanol reforming was obtained according to the above method, except for hydration.

Then, these catalysts were cut to have a size of 5 mm×5 mm, and the catalyst having a surface area of 24 $cm^2$ were put into reaction tubes having an inner diameter of 1 cm. The catalysts were reduced by a reducing gas (gas mixture of 10% hydrogen and 90% nitrogen) of 1250 ml/min. The reducing temperature was 400°C and the reducing time was 2 hours. After this process, the gas mixture of water and methanol with water to methanol molar ratio of 1 and with catalyst surface area to gas mixture flow ratio of 2 $m^{-1}$ hr was flowed into the reaction tubes and the activity of the methanol reforming was examined. The results are illustrated in Fig. 5. The reaction temperature was 250°C.

As can be seen from Fig. 5, the hydration resulted in twice or higher conversion (activity was improved). Also, the hydration provided high selectivity of $CO_2$ and reduced by-product of substances other than water and carbon dioxide.

2. Embodiments of the Second Invention

(Examples)

An aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After this process, the aluminum plate was energized in an oxalic acid aqueous solution (20°C) with 4 weight % concentration at a current density of $25A/m^2$, for 16 hours, thus conducting anodic oxidation. Then, the aluminum plate was calcined at 350°C in air for 1 hour and cut to have a size of 5 cm×11 cm.

The cut aluminum plates were immersed in 700 ml of distilled water. The temperature was raised up to 80°C at a rate of 1°C/min. The aluminum plates were kept at 80°C for 1 hour and then taken out. Then, the aluminum plates were dried in air and calcined at 400°C in air for 3 hours, thus conducting hydration.

Then, the aluminum plates were immersed in 700 ml of a copper acetate aqueous solution with 0.1 mol/liter concentration. The temperature was raised up to 80°C at a rate of 1°C /min. The aluminum plates were kept at 80°C for 1 hour and then taken out. The aluminum plates were dried at room temperature and calcined at 400°C in air for 3 hours, thereby obtaining a copper-based catalyst for combustion reaction.

(Contrast)

As a contrast, a platinum-based catalyst was obtained as follows. Specifically, a platinum-containing aqueous solution was prepared in the following manner. Ammonia water was added to chloroplatinic acid ($H_2 Pt Cl_6 \cdot 6H_2O$ ) aqueous solution with 0.2 mol/liter concentration per platinum so as to have pH of 11.4, thereby obtaining a platinum-containing aqueous solution.

The aluminum plate which was anode-oxidized in the above-mentioned step was calcined at 350°C in air for 1 hour and then cut to have a size of 5 cm×10 cm.

Then, the aluminum plates were immersed in 700 ml of the above platinum-containing aqueous solution. The aluminum plates were kept at 80°C for 1 hours and then taken out. The aluminum plates were dried at room temperature for 1 day and then calcined at 400°C in air for 3 hours, thereby obtaining the platinum-based catalyst.

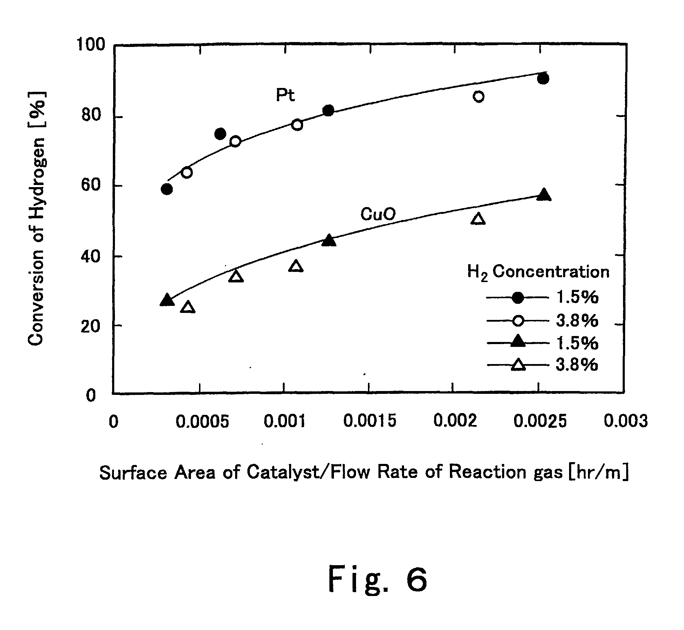

Then, the copper-based catalyst of the example and the platinum-based catalyst of the contrast were respectively cut to have a size of 5mm× 5mm and 10 pieces of the cut catalysts were put into stainless steel reaction tubes of an inner diameter of 10 mm. The flow ratio of hydrogen to oxygen was set to 1 and the flow of hydrogen-containing air with 1. 5% or 3. 8 % hydrogen concentration was varied for the purpose of measurement of the reaction ratio of hydrogen. The results are illustrated in Fig. 6. The reaction temperature was 300°C. The conversion of hydrogen refers to a ratio (%) of reacted hydrogen to supplied hydrogen. Fig. 6 shows that the conversion of the copper-based catalyst is satisfactory for use in the catalyst for combustion reaction, although it is lower than that of the platinum-based catalyst.

3. Embodiments of the Third Invention

(Examples of Water-Gas-Shift Reaction Catalyst)

An aluminum plate according to JIS A - 1050, which has a thickness of 0.3 mm and a size of 25 cm × 12 cm, was immersed in a sodium hydroxide aqueous solution with 20 weight % concentration and then in nitric acid with 30 weight % concentration. After this process, the aluminum plate was energized in an oxalic acid aqueous solution (20°C) with 4 weight % concentration at a current density of $25A/m^2$, for 16 hours, thus conducting anodic oxidation. Then, the aluminum plate was calcined at 350°C in air for 1 hour and cut to have a size of 5 cm × 11 cm. The cut aluminum plates were immersed in 700 ml of distilled water. The temperature was raised from room temperature up to 80°C at a rate of 1°C /min. The aluminum plates were kept at 80°C for 1 hour and then taken out. The aluminum plates were dried in air and calcined at 400°C in air for 3 hours.

The aluminum plates were immersed in 700ml of iron acetate aqueous solution with 0.001 mol/liter concentration. The temperature was raised from room temperature up to 80°C at a rate of 1/°Cmin. The aluminum plates were kept at 80 °C for 1 hour and then taken out. The aluminum plates were dried at room temperature and calcined at 400°C in air for 3 hours, thereby obtaining an iron-based catalyst for water-gas-shift reaction.

(Examples of Catalyst for Selective Oxidation Reaction of Carbon Monoxide)

An aluminum plate according to JIS A - 1050, which has a thickness of 0.3 mm and a size of 25 cm×12 cm, was immersed in a sodium hydroxide aqueous solution with 20 weight % concentration and then in nitric acid with 30 weight % concentration. After this process, the aluminum plate was energized in an oxalic acid aqueous solution (20°C) with 4 weight % concentration at a current density of 25A/m$^2$ , for 16 hours, thus conducting anodic oxidation. Then, the aluminum plate was calcined at 350°C in air for 1 hour and then cut to have a size of 5 cm×11 cm.

The cut aluminum plates were immersed in 700ml of distilled water. The temperature was raised from room temperature up to 80°C at a rate of 1°C/min. The aluminum plates were kept at 80°C for 1 hour and then taken out. Then, the aluminum plates were dried in air and calcined at 400°C in air for 3 hours.

Then, the aluminum plates were immersed in 300 ml of a solution obtained by dissolving ruthenium chloride with 0.002 mol/liter concentration into acetone. The aluminum plates were kept at room temperature for 24 hours and then taken out. The aluminum plates were dried at room temperature and calcined at 400°C in air for 3 hours, thereby obtaining a ruthenium-based catalyst for selective oxidation of carbon monoxide.

4. Embodiments of the Fourth Invention

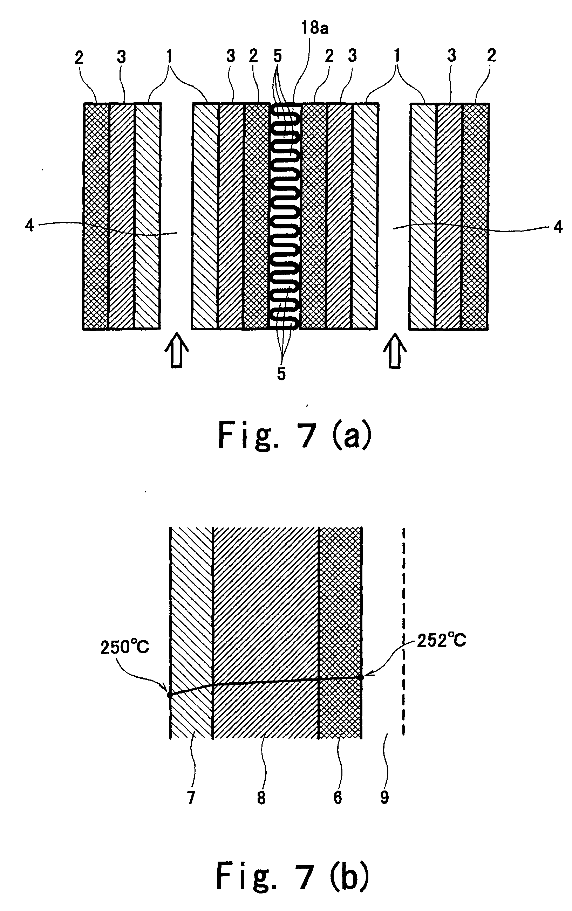

Fig. 7 (a) is a cross-sectional view for showing placement of plate catalysts used in a plate-fin heat exchange type reformer according to a fourth invention. In Fig. 7(a), reference numeral 1 denotes plate catalyst for steam reforming reaction, 2 denotes plate catalyst for combustion reaction, and 3 denotes metal separating wall. The separating wall 3 is preferably superior in heat transfer characteristic, and can be comprised of stainless steel, aluminum, aluminum alloy, copper or the like. In order to carry different catalysts on both surfaces of each of the separating walls in the above-mentioned catalyst preparing method, when the separating wall as the metal substrate provided with a porous oxide layer on a surface thereof is immersed in an aqueous solution of a metal compound of a weak electrolyte with small degree of salt dissociation or an organic solvent solution of a metal compound, a seal member (e.g., Teflon sheet) is bonded to one of the surfaces, or otherwise, after incorporated into the reformer, the aqueous solution of the metal compound of the weak electrolyte with small degree of salt dissolution or the organic solvent solution of the metal compound is circulated in a flow passage formed by the plate catalyst for steam reforming reaction and the plate catalyst for steam reforming reaction and in a flow passage formed by the plate catalyst for combustion reaction and the plate catalyst for combustion reaction, and then, these plate catalysts are calcined.

Reference numeral 4 denotes a flow passage of a gas for steam reforming (e.g., methane gas) and steam, 5 denotes a flow passage of a hydrogen-rich gas (e.g., an excess gas from a fuel cell with composition of $H_2$ : 46%, $CO_2$ : 50%, and CO : 4%) and air, and 18a denotes fin for forming the gas flow passage. Continuously with the separating wall 3 having the plate catalyst 1 for steam reforming reaction and the plate catalyst 2 for combustion reaction, a separating wall having the plate catalyst for water-gas-shift reaction on one surface and having the plate catalyst 2 for combustion reaction on the other surface, and a separating wall having the plate catalyst for selective oxidation reaction of carbon monoxide on one surface and the plate catalyst 2 for combustion reaction on the other surface, are provided in the direction in which the gas flows (in the direction indicated by arrows in Fig. 7(a)). Since the water-gas-shift reaction and the oxidation reaction of carbon monoxide are exothermic reactions, the plate catalyst for combustion reaction is not necessarily provided at the portion where the plate catalyst for water-gas-shift reaction and the plate catalyst for selective oxidation reaction of carbon monoxide are provided.

In the reformer of the plate catalyst method having the above-identified constitution, the temperature of the gas introduced through the flow passage 5 is raised by an appropriate heat source to allow the following reaction to be conducted :

$$H_2 + 1/2O_2 \rightarrow H_2O \ — \ 241.8 \ kJ/mol$$

Meanwhile, the gas introduced through the flow passage 4 causes the following steam reforming reaction (endothermic reaction) to be conducted:

$$CH_4 + H_2O \rightarrow CO + 3H_2 + 206.2 \text{ kJ/mol}$$

As a heat source necessary for steam reforming reaction as the endothermic reaction, the heat generated in the combustion reaction is supplied to the plate catalyst 1 for steam reforming reaction through the separating wall 3, whereby the steam reforming reaction is smoothly conducted. Further, since carbon monoxide generated in the steam reforming reaction is eliminated in the water-gas-shift reaction and the oxidation reaction given by the following formulae, it is possible to attain a high-quality reformed gas nearly free from components other than hydrogen, carbon dioxide, and steam:

$$CO + H_2O \rightarrow CO_2 + H_2 \text{ —— } 41.317 \text{ kJ/mol}$$

$$CO + 1/2O_2 \rightarrow CO_2 \text{ —— } 282.964 \text{ kJ/mol}$$

Fig. 7(b) shows an example of temperature distribution of the plate catalysts. When the reforming reaction of methanol is conducted at 250°C, since the surface temperature of the plate catalyst 6 for combustion reaction (platinum catalyst of 0.2 mm thickness) is 252°C, and therefore there is slight difference in temperature between the plate catalyst 6 for combustion reaction and the plate catalyst 7 for steam reforming reaction ( copper - zinc catalyst of 0.2mm thickness), which has temperature of 250°C. This exhibits extremely high heat transfer efficiency. On the other hand, in the conventional heating method using a burner shown in Fig. 11(a), the temperature difference between the heating source and the catalytic layer is significantly large, and therefore, the heat transfer efficiency is extremely low. This is because, the heat generated in the exothermic reaction (combustion reaction) and transferred to the metal has a heat transfer resistance much lower than that of a heat of high-temperature gas flame generated by the burner, and therefore, as shown in Fig. 7(b), the temperature is hardly sloped from the plate catalyst 6 for combustion reaction, through the separating wall 8 (stainless steel of 0.5mm thickness), and to the plate catalyst 7 for steam reforming reaction. Conversely, since the heat of the high-temperature gas flame generated by the burner and transferred to the metal has a very high heat-transfer resistance, the temperature on the gas side needs to be set to 950°C, as shown in Fig. 11(b), in the case of the reforming reaction conducted at 250°C. In Fig. 11(b), reference numeral 9 denotes a heat transfer laminar film on the gas side.

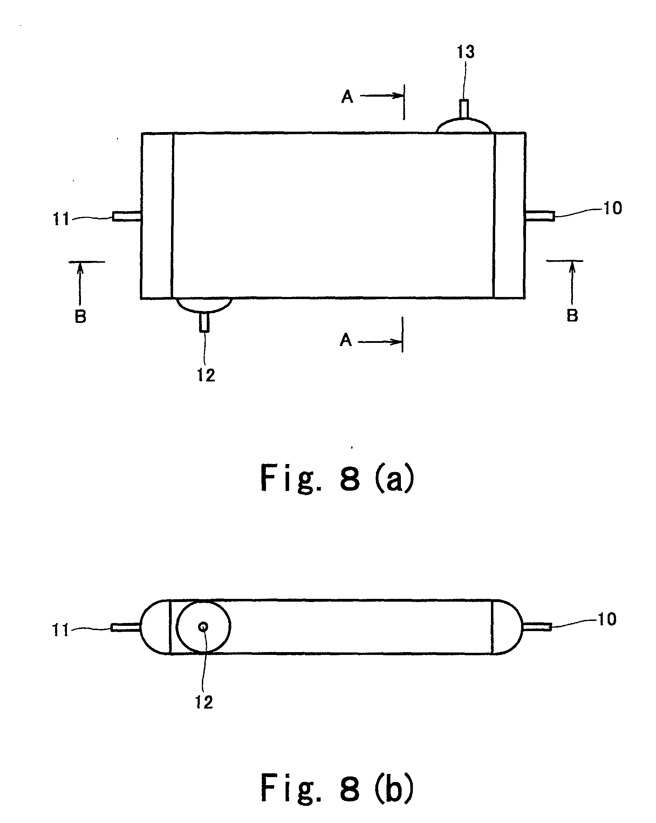

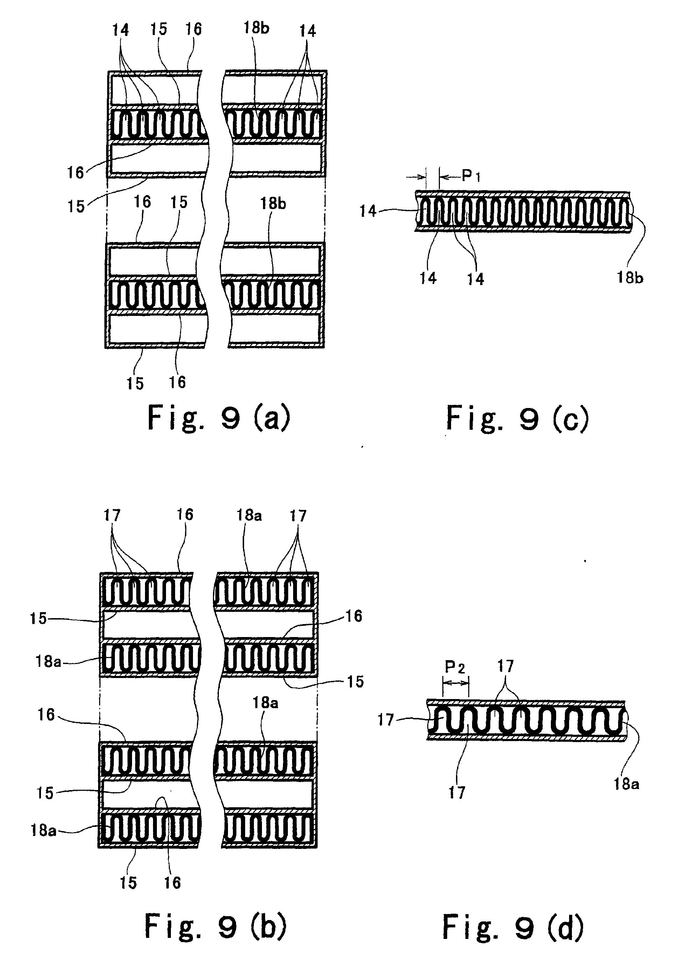

Fig. 8(a) is plan view showing an example of a plate-fin heat exchange type reformer comprising the plate catalysts shown in Fig. 7(a), and Fig. 8 (b) is a side view thereof. Reference numeral 10 denotes an inlet of the gas for steam reforming reaction and steam, 11 denotes an outlet of a reformed gas, 12 denotes an inlet of a hydrogen-rich gas and air, and 13 denotes an outlet of a combustion exhaust gas. Since the direction in which the gases for steam reforming reaction flow and the direction in which the gases for combustion reaction flow are thus orthogonal to each other, the reformer sectioned along A - A in Fig. 8(a) is the reformer shown in Fig. 9(a) and the reformer sectioned along B - B in Fig. 8(a) is the reformer in Fig. 9(b). In Fig. 9 (a), reference numeral 14 denotes a flow passage of the gases for steam reforming reaction and steam, and the gases for combustion reaction do not flow through those reforming gases flow. Reference numeral 15 denotes a plate catalyst comprised of the plate catalyst for steam reforming reaction, the separating wall, and the plate catalyst for combustion reaction arranged in this order from below. Reference numeral 16 denotes a plate catalyst comprised of the plate catalyst for combustion reaction, the separating wall, and the plate catalyst for steam reforming reaction arranged in this order from below. In Fig. 9 (b), reference numeral 17 denotes a flow passage of the hydrogen-rich gas and air, and reforming gases do not flow through the flow passage through which the gasses for combustion reaction flow. Specifically, as shown in Fig. 9 (b), the plate catalysts for combustion reaction are provided with fin 18a forming the gas flow passage interposed therebetween as shown in Fig. 9(a), and the plate catalysts for steam reforming reaction are provided with fin 18b forming the gas flow passage interposed therebetween. The gases for combustion reaction are flowed through a flow passage 17 formed by the fin 18a where the plate catalysts for combustion reaction are provided and the gases for steam reforming reaction are flowed through the flow passage 14 formed by the fin 18b where the plate catalysts for steam reforming reaction are provided. Thus, by alternately arranging the portion where the reforming reaction is conducted and the portion where the combustion reaction is conducted, heat exchange is efficiently conducted.

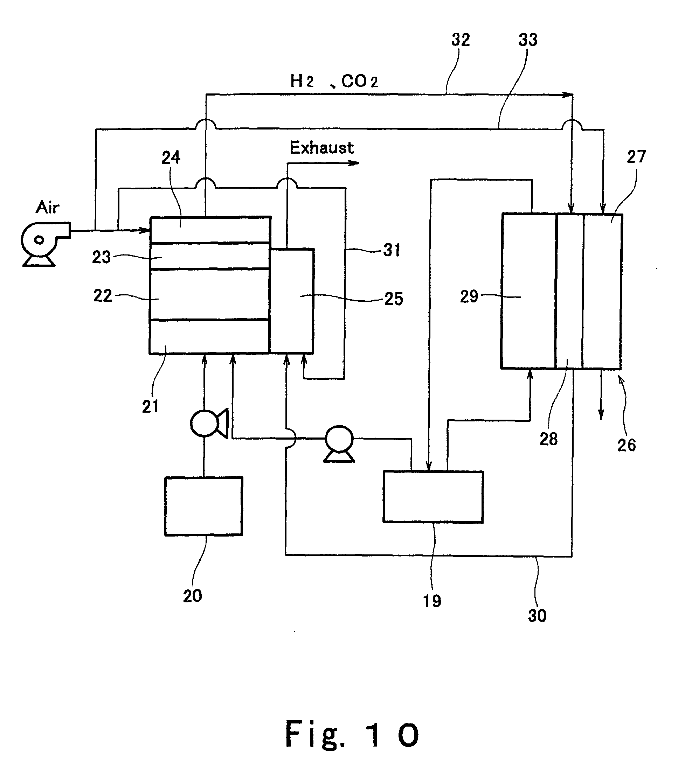

Fig. 10 is a flow sheet showing an example of the use of the plate-fin heat exchange type reformer of the present invention as a reformer for fuel supply of the fuel cell. In Fig. 10, reference numeral 19 denotes a pure water tank, 20 denotes a methanol tank, 21 denotes an evaporator, 22 denotes a steam reformer, 23 denotes a water-gas-shift reactor, 24 denotes a carbon monoxide oxidizer, 25 denotes a combustor, and 26 denotes a fuel cell. Although, for better understanding, the steam reformer 22, the water-gas-shift reactor 23, the carbon monoxide oxidizer 24, and the combustor 25 are illustrated as arranged separately, actual constitutions are as illustrated in Figs. 7 - 9. The fuel cell 26 is comprised of an oxygen electrode 27, a hydrogen electrode (fuel electrode ) 28, and a cooler 29. Although an proton exchange membrane is reserved between the oxygen electrode 27 and the hydrogen electrode 28, this is not illustrated in Fig. 10.

In a fuel cell power generating system constituted as described above, the pure water supplied from the pure water tank 19 and the methanol supplied from the methanol tank 20 respectively evaporate in the evaporator 21 to be formed into gases, which are then introduced into the steam reformer 22. Meanwhile, in the combustor 25, hydrogen discharged from the hydrogen electrode 28 through a passage 30 and air supplied through a passage 31 react with each other, to generate a combustion heat. This reaction heat is supplied to the evaporator 21 to be utilized as a heat source for evaporation and also as a heat source for steam reforming described later. Specifically, since the steam reforming reaction of methanol conducted in the reformer 22 is the endothermic reaction, the steam reforming reaction of methanol proceeds by utilizing the combustion heat as the heat source as given by the following formula:

$$CH_3OH + H_2O \rightarrow CO_2 + 3H_2$$

Accordingly, in the theory, no carbon monoxide is contained in the reformed gas. In actuality, however, the reformed gas generally contains approximately 1 to 2 % carbon monoxide resulting from decomposition or the like of methanol. Since the carbon monoxide is a catalyst poison to an electrode catalyst (platinum) of the fuel cell and even the minute amount of carbon monoxide greatly degrades the electode characteristic as mentioned previously, it is necessary to eliminate the carbon monoxide from the reformed gas almost perfectly. For this purpose, the steam-reformed gas in the reformer 22 is adapted to pass through the water-gas-shift reactor 23 and the carbon monoxide oxidizer 24, whereby the carbon monoxide is eliminated almost perfectly (CO concentration = 10 ppm or less).

The hydrogen-rich gas ($H_2$ = about 75%, $CO_2$ =about 25%) is supplied to the hydrogen electrode 28 through a passage 32, while the air is supplied to the oxygen electrode 27 through a passage 33. In the hydrogen electrode 28, the following reaction is conducted:

$$H_2 \rightarrow 2H^+ + 2e^-$$

Meanwhile, in the oxygen electrode 27, the following reaction is conducted:

$$1/2O_2 + 2H^+ + 2e^- \rightarrow H_2O$$

In this case, power of about 1.2 volt can be taken out at normal temperature. In this cell, the power can continue to be generated so long as the hydrogen source and the oxygen source are respectively supplied to the both electrodes.

Thus, the plate-fin heat exchange type reformer of the present invention is characterized in that the portion where the reforming reaction is conducted and the portion where the combustion reaction is conducted are alternately arranged, and therefore, the heat exchange efficiency is high. Furthermore, by employing the constitution described below, the reaction can proceed while properly controlling a rate without damage to the catalyst.

(1) Since the rate of combustion reaction is higher than that of the reforming reaction, heat balance between these reactions needs to be kept. Accordingly, the pitches of the fin forming the flow passages are set in such a manner that a pitch $P_2$ of the fin 18a forming the flow passage of the gases for combustion reaction is increased so as to reduce a total cross-sectional area of the gas flow passage 17 and a pitch Pi of the fin 18b forming the flow passage of the gas for steam reforming reaction is reduced so as to increase the total cross-sectional area of the gas flow passage 14. Then, the gases for combustion reaction can be made comparatively less in amount than the gases for reforming reaction and the catalyst for combustion reaction carried on the fin can be made less in amount than the catalyst for reforming reaction carried on the fin. As a consequence, the total amount of heat generated in the combustion reaction can be reduced and the heat balance between these reactions can be kept. By setting the difference in pitch of the fins between these plate catalysts according to the reaction rate, optimum pitches are obtained.

Further, by setting the amount of catalyst for combustion reaction less than the amount of catalyst for reforming reaction as the whole, the aforesaid heat balance can be kept.

(2) The rate of the reforming reaction is high in the vicinity of the inlet of the reformer and decreases as it is closer to the outlet of the reformer. If the reaction order is different between reforming and combustion, the conversion varies depending on the position in the reformer, so that temperature variation locally occurs regardless of the well-balanced heat in the whole reformer. Accordingly, a noble metal based reforming catalyst that has low ignition temperature and high activity is provided in the vicinity of the inlet of the reformer and a non-noble metal oxide based reforming catalyst that has high ignition temperature and low activity but has a low cost is provided on the side of the outlet of the reformer. Thereby, the temperature variation in the reformer can be lessened and economical equipment is realized. This is due to the fact that the noble metal based reforming catalyst, such as Pt and Pd, has the low ignition temperature and high activity, but is expensive, while the non-noble metal oxide based reforming catalyst such as NiO, $CO_2O_3$, CuO, has high ignition temperature and low activity, but is advantageously inexpensive. So, the inexpensive catalyst is favorably employed as long as satisfactory activity is ensured at each position, because this provides economical equipment. Accordingly, the noble metal based reforming catalyst that has the low ignition temperature and high activity is provided in the vicinity of the inlet of the reformer where quick ignition is needed and the non-noble metal oxide based reforming catalyst that has high ignition temperature is provided on the side of the outlet of the reformer where the temperature is already considerably high. With this method, the reaction rate in the reformer can be controlled by utilizing the characteristics of the respective catalysts for the purpose of reducing temperature variations, and simultaneously, economical equipment is provided.

Moreover, by gradationally placing the noble metal based reforming catalyst and the non-noble metal oxide based reforming catalyst so that a mixing ratio of these catalysts is gradually changed, the variation of temperature in the reformer can be minimized. In this gradational placement, only the noble metal based reforming catalyst is provided at the inlet of the reformer, the content of the noble metal based reforming catalyst is gradually reduced and the content of the non-noble metal oxide based reforming catalyst is increased, e. g., in the ratio of 9 : 1, 8: 2, and 7: 3, ... and only the non-noble metal oxide based reforming catalyst is provided on the side of the outlet of the reformer.

(3) Although the heat is well-balanced in a steady condition, it becomes badly balanced when the gas flow fluctuates. Accordingly, by introducing the gas for combustion reaction into the reformer from a plurality of spots as well as the end portion of the reformer, the time required for recovery to the steady reaction condition can be reduced.

[Industrial Applicability]

The present invention is well suitable for use in a hydrogen generator for a polymer electrolyte fuel cell because the catalyst is active at relatively low temperatures and by-product of carbon monoxide is less.

**Claims**

1. A catalyst for exothermic or endothermic reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow metal or metal oxide exhibiting catalytic activity to be carried on the porous oxide layer of the metal substrate.

2. A catalyst for exothermic or endothermic reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an organic solvent solution of a metal compound and then calcined, to thereby allow metal or metal oxide exhibiting catalytic activity to be carried on the porous oxide layer of the metal substrate.

3. A catalyst for exothermic or endothermic reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an aqueous solution of a metal compound of a weak electrolyte with small degree of salt dissociation and then calcined, to thereby allow metal or metal oxide exhibiting catalytic activity to be carried on the porous oxide layer of the metal substrate.

4. A catalyst for exothermic or endothermic reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being hydrated, immersed in an organic solvent solution of a metal compound and then calcined, to thereby allow metal or metal oxide exhibiting catalytic activity to be carried on the porous oxide layer of the metal substrate.

**5.** The catalyst for exothermic or endothermic reaction according to Claim 1, 2, 3 or 4, wherein the endothermic reaction is steam reforming reaction of methanol or hydrocarbon, and the metal or metal oxide exhibiting catalytic activity is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

**6.** The catalyst for exothermic or endothermic reaction according to Claim 1, 2, 3, or 4, wherein the exothermic reaction is combustion reaction, and the metal or metal oxide exhibiting catalytic activity is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

**7.** A catalyst for water-gas-shift reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as catalyst metal on the porous oxid e layer of the metal substrate.

**8.** A catalyst for water-gas-shift reaction comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an organic solvent solution of a metal compound and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as catalyst metal on the porous oxide layer of the metal substrate.

**9.** A catalyst for selective oxidation reaction of carbon monoxide comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an aqueous solution of a metal compound of a weak electrolyte with small degree of salt dissociation and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as catalyst metal on the porous oxide layer of the metal substrate.

**10.** A catalyst for selective oxidation reaction of carbon monoxide comprising a metal substrate made of at least one of aluminum, aluminum alloy, stainless steel, and copper, which is provided with a porous oxide layer on a surface thereof and comprises one of shapes including a plate, a tube, a tube with fin, a corrugated plate, and a plate with fin, the metal substrate being immersed in an organic solvent solution of a metal compound and then calcined, to thereby allow copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium to be carried as catalyst metal on the porous oxide layer of the metal substrate.

**11.** A method of producing a catalyst for exothermic or endothermic reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate.

**12.** A method of producing a catalyst for exothermic or endothermic reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an organic solvent solution of a metal compound and then calcining the metal substrate, thereby carrying metal or metal oxide exhibiting catalytic activity on the porous oxide layer of the metal substrate.

13. A method of producing a catalyst for exothermic or endothermic reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, hydrating the metal substrate, immersing the hydrated metal substrate in an aqueous solution of a metal compound of a weak electrolyte with small degree of salt dissociation and then calcining the metal substrate, thereby carrying metal or metal oxide exhibiting catalytic activity on the porous oxide layer of the metal substrate.

14. A method of producing a catalyst for exothermic or endothermic reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, and a plate with fin, hydrating the metal substrate, immersing the hydrated metal substrate in an organic solvent solution of a metal compound and then calcining the metal substrate, thereby carrying metal or metal oxide exhibiting catalytic activity on the porous oxide layer of the metal substrate.

15. The method of producing the catalyst for exothermic or endothermic reaction according to Claim 11, 12, 13, or 14, wherein the endothermic reaction is steam reforming reaction of methanol or hydrocarbon, and the metal or metal oxide exhibiting catalytic activity is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

16. The method of producing the catalyst for exothermic or endothermic reaction according to Claim 11, 12, 13, or 14, wherein the exothermic reaction is combustion reaction, and the metal or metal oxide exhibiting catalytic activity is copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium.

17. A method of producing a catalyst for water-gas-shift reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as catalyst metal on the porous oxide layer of the metal substrate.

18. A method of producing a catalyst for water-gas-shift reaction comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an organic solvent solution of a metal compound and then calcining the metal substrate, thereby carrying copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as catalyst metal on the porous oxide layer of the metal substrate.

19. A method of producing a catalyst for selective oxidation reaction of carbon monoxide comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an aqueous solution of a metal compound of a weak electrolyte with small degree of salt dissociation and then calcining the metal substrate, thereby carrying copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as catalyst metal on the porous oxide layer of the metal substrate.

20. A method of producing a catalyst for selective oxidation reaction of carbon monoxide comprising providing a porous oxide layer on a surface of a metal substrate made of at least one of aluminum, aluminum alloy, stainless steel, and copper, which comprises one of shapes including a plate, a tube, a tube with fin, a corrugated plate, and a plate with fin, immersing the metal substrate in an organic solvent solution of a metal compound and then calcining the metal substrate, thereby carrying copper or copper oxide, and metal or metal oxide of at least one of zinc, chromium, manganese, nickel, iron, cobalt, ruthenium, rhodium, palladium, platinum, gold, silver, magnesium, calcium, lanthanum, titanium, zirconium, yttrium, and cerium as catalyst metal on the porous oxide layer of the metal substrate.

21. The method of producing the catalyst for exothermic or endothermic reaction according to Claim 11, 13, 15, or 16, wherein a copper acetate aqueous solution is used as the aqueous solution of the weak electrolyte with small degree of salt dissociation, and wherein when the metal substrate provided with the porous oxide layer on the surface thereof is immersed in the copper acetate aqueous solution to carry the copper catalyst, weak acid is added to the copper acetate aqueous solution to inhibit precipitation of basic copper acetate.

22. A plate-fin heat exchange type reformer comprising a heat exchange element having a first plate catalyst for combustion reaction on one of surfaces of a separating wall, and a second plate catalyst comprised of a catalyst for steam reforming reaction, a catalyst for water-gas-shift reaction, and a catalyst for selective oxidation reaction of carbon monoxide arranged on the other surface of the separating wall along the direction in which a gas flows, wherein the first plate catalyst and the first plate catalyst are provided with fin forming a gas flow passage interposed therebetween, and the second plate catalyst and the second plate catalyst are provided with the fin forming the gas flow passage interposed therebetween.

23. The plate-fin heat exchange type reformer according to Claim 22, wherein pitches of the fin provided so as to form the gas flow passages between the first plate catalyst and the first plate catalyst and between the second plate catalyst and the second plate catalyst are set in such a manner that the pitch of the fin provided between the first plate catalyst and the first plate catalyst is made longer so as to reduce a total cross-sectional area of the gas flow passage and the pitch of the fin provided between the second plate catalyst and the second plate catalyst is made shorter so as to increase the total cross-sectional area of the gas flow passage.

24. The plate-fin heat exchange type reformer according to Claim 22 or 23, wherein the catalyst for combustion reaction is set less in carried amount than the catalyst for steam reforming reaction.

25. The plate-fin heat exchange type reformer according to Claim 22, 23 or 24, wherein a noble metal based reforming catalyst is provided in the vicinity of an inlet of the reformer and a non-noble metal oxide based reforming catalyst is provided on the side of an outlet of the reformer.

26. The plate-fin heat exchange type reformer according to Claim 25, wherein the noble metal based reforming catalyst and the non-noble metal oxide based reforming catalyst are gradationally placed such that a mixing ratio of these catalysts is gradually changed.

27. The plate-fin heat exchange type reformer according to Claim 22, 23, 24, 25, or 26, wherein the gas for combustion reaction is introduced into the reformer through a plurality of spots of the reformer.

Start

↓

Anodic Oxidation
(Formation of Oxide Layer)

↓

Hot-Water Treatment
(Increase of Specific Surface Area)

↓

Carrying Catalyst

↓

Reaction Test

# Fig. 1

```
            ┌─────────────┐
            │    Start     │
            └──────┬──────┘
                   │
                   ▼
    ┌──────────────────────────────┐
    │      Anodic Oxidation         │
    │  (Formation of Oxide Layer)   │
    └──────────────┬───────────────┘
                   │
                   ▼
        ┌──────────────────────┐
        │   Carrying Copper     │
        └──────────┬───────────┘
                   │
                   ▼
      ┌────────────────────────────┐
      │   Reduction by Hydrogen    │
      └─────────────┬──────────────┘
                    │
                    ▼
        ┌──────────────────────┐
        │    Reaction Test      │
        └──────────────────────┘
```

# Fig. 2

Fig. 3

Fig. 4

Fig. 5

Fig. 6

Fig. 7 (a)

Fig. 7 (b)

Fig. 8 (a)

Fig. 8 (b)

Fig. 9 (a)

Fig. 9 (c)

Fig. 9 (b)

Fig. 9 (d)

Fig. 10

Fig. 1 1 (a)

Fig. 1 1 (b)

## INTERNATIONAL SEARCH REPORT

| International application No. |
| --- |
| PCT/JP00/08234 |

**A. CLASSIFICATION OF SUBJECT MATTER**
Int.Cl$^7$ B01J 23/72, 23/80, 23/745, 23/46, 37/02,
C01B 3/32, 3/38, H01M 8/06,
C10G 11/02, C10K 1/32

According to International Patent Classification (IPC) or to both national classification and IPC

**B. FIELDS SEARCHED**

Minimum documentation searched (classification system followed by classification symbols)
Int.Cl$^7$ B01J 21/00-38/74, C01B 3/32-48

Documentation searched other than minimum documentation to the extent that such documents are included in the fields searched
Jitsuyo Shinan Koho          1926-1996     Toroku Jitsuyo Shinan Koho  1994-2001
Kokai Jitsuyo Shinan Koho    1971-2001     Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 3-161053, A (Matsushita Electric Ind. Co., Ltd.), 11 July, 1991 (11.07.91), | 1,11 |
| Y | Claims; description, page 2, upper right column, lines 2 to 4 & US, 5094222, A     & EP, 429994, A1 & KR, 9302244, B | 3,13 |
| X | US, 4188309, A (DEUTSCHE GOLD-UND SILBER-SCHEIDEANSTALT VORMALS ROESSLER), | 2,12 |
| Y | 12 February, 1980 (12.02.80), Claims; description, Column 7, lines 40 to 48 & JP, 54-67587, A Claims; description, page 8, lower right column, line 15 to page 9, upper left column, line 2 & DE, 2745188, A     & GB, 2005149, A & FR, 2405093, A | 4,14 |
| Y | JP, 2-144154, A (Hideo KAMEYAMA), 01 June, 1990 (01.06.90), Claims; description, page 2, upper left column, lines 12 to 20   (Family: none) | 3,4,13,14 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 February, 2001 (15.02.01) | 27 February, 2001 (27.02.01) |

| Name and mailing address of the ISA/ Japanese Patent Office | Authorized officer |
| --- | --- |
| Facsimile No. | Telephone No. |

Form PCT/ISA/210 (second sheet) (July 1992)

## INTERNATIONAL SEARCH REPORT

International application No.

PCT/JP00/08234

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP, 3-232701, A (Mitsubishi Heavy Industries, Ltd.), 16 October, 1991 (16.10.91), Claims; description, page 3, upper left column, line 12 to upper right column, line 3; examples 1, 2 (Family: none) | 1-21, 22-26 |
| Y | Sahdan Houjin Nihon Kagakukai ed., "Kagaku Sousetsu No.34 Shokubai Sekkei," the 3rd printing, Kabushiki Kaisha Gakkai Shuppan Center, 20 September, 1998 (20.09.98), pp.30-38 | 1-21 |
| Y | EP, 861802, A2 (MITSUBISHI DENKI KABUSHIKI KAISHA), 02 September, 1998 (02.09.98), Claims; Column 24, lines 18 to 23 & JP, 10-236802, A Claims; description, page 10, Column 18, Par. No. 101 & CA, 2229948, A1 | 7,8,17,18, 22-26 |
| Y | JP, 8-188783, A (Matsushita Electric Ind. Co., Ltd.), 23 July, 1996 (23.07.96), Claims (Family: none) | 9,10,19,20 |
| Y | JP, 9-266005, A (Toshiba Corporation), 07 October, 1997 (07.10.97), Claims; description, page 4, Column 6, Par. No. 3 (Family: none) | 9,10,19,20 |
| Y | JP, 7-126002, A (Kabushiki Kaisha Aqueous Research), 16 May, 1995 (16.05.95), entire description (Family: none) | 22-26 |
| Y | JP, 10-182102, A (Toshiba Corporation), 07 July, 1998 (07.07.98), entire description (Family: none) | 22-26 |

Form PCT/ISA/210 (continuation of second sheet) (July 1992)

# EP 1 232 790 A1

| **INTERNATIONAL SEARCH REPORT** | International application No. |
|---|---|
| | PCT/JP00/08234 |

**Box I   Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

The subject matters of claims 1 to 21 relate to "a catalyst for a exothermic reaction or an endothermic reaction and a method for preparing the catalyst, and a catalyst for a water-gas-shift reaction or a selective oxidation of carbon monoxide and a method for preparing the catalyst".

On the other hand, the subject matters of claims 22 to 27 relate to "a plate-fin heat exchange type reformer having a catalyst for burning reaction, a catalyst for a steam reforming reaction, a catalyst for a water-gas-shift reaction and a catalyst for a selective oxidation of carbon monoxide".

In the above claims, there is no description that each catalyst described in claims 22 to 27 is a catalyst according to any of claims 1 to 21. Therefore, there is no technical relationship between these inventions involving one or more of the same or corresponding technical features, and thus these inventions are not so linked as to form a single inventive concept.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest.

☒ No protest accompanied the payment of additional search fees.

Form PCT/ISA/210 (continuation of first sheet (1)) (July 1992)

39